# EUROPÄISCHE PATENTSCHRIFT

(11) **EP 2 712 999 B1**
(45) Veröffentlichungstag und Bekanntmachung des Hinweises auf die Patenterteilung: **31.03.2021**
(21) Anmeldenummer: 13004635.2
(22) Anmeldetag: 24.09.2013
(51) Int. Cl.: F16D 28/00, E05F 15/603, E05F 15/611, E05F 15/632, F16D 21/04, F16D 11/14

(54) **Bewegungsvorrichtung für ein bewegbares Möbelteil**
Motion device for a mobile furniture item
Dispositif de mouvement pour un élément de meuble mobile

(30) Priorität: 01.10.2012 DE 202012009449 U
(43) Veröffentlichungstag der Anmeldung: 02.04.2014
(73) Patentinhaber: Grass GmbH, 64354 Reinheim (DE)
(72) Erfinder: Lauffer, Adelbert, 72766 Reutlingen (DE)
(74) Vertreter: Patentanwälte Magenbauer & Kollegen Partnerschaft mbB

(56) Entgegenhaltungen:
- DE-U1-202010 016 154
- DE-U1-202011 000 964

## Beschreibung

Die Erfindung betrifft eine Bewegungsvorrichtung für ein bewegbares Möbelteil, insbesondere Möbelklappe, Tür, Schublade oder dergleichen, mit einem Stellantrieb und einem durch den Stellantrieb antreibbaren Abtrieb für das bewegbare Möbelteil, wobei eine mit dem Stellantrieb und dem Abtrieb zusammenwirkende Kupplung vorgesehen ist.

Derartige Bewegungsvorrichtungen für bewegliche Möbelteile, bei denen zwischen Stellantrieb und Abtrieb eine Kupplung angeordnet ist, sind bereits seit Längerem bekannt.

Die DE 20 2011 000 964 U1 offenbart eine derartige Bewegungsvorrichtung in Form eines elektromagnetischen Linearantriebs, der ein Gehäuse aufweist, in dem eine Antriebseinheit angeordnet ist, dessen Abtriebsglied als linear verfahrbare Spindelmutter ausgebildet ist, die mit einem Anschlussteil zur Verbindung mit einem weiteren Bauelement in Wirkverbindung steht. Die Spindelmutter steht mit dem Anschlussteil im Normalbetriebszustand über ein erstes und ein damit in Eingriff stehendes zweites Kupplungsteil in Eingriff. Durch Verschiebung von mindestens einen Kupplungsteil in Längsrichtung der Spindel ist die Mitnahmeverbindung entkoppelbar.

Die Kupplung sorgt dafür, dass das bewegliche Möbelteil auf zwei unterschiedliche Arten bewegt werden kann. Bei wirksamer Kupplung wird das bewegliche Möbelteil motorisch mittels des Stellantriebs angetrieben, beispielsweise im Falle einer Möbelklappe oder Schublade zwischen der Offen- und Schließstellung bewegt. Bei unwirksamer Kupplung sind Stellantrieb und Abtrieb voneinander getrennt und das bewegliche Möbelteil kann manuell bewegt werden. Dies ist vor allem dann wichtig, wenn der Stellantrieb defekt oder infolge eines Energieausfalls nicht betriebsfähig ist.

Aufgabe der Erfindung ist es, eine Bewegungsvorrichtung der eingangs genannten Art zu schaffen, die einfach aufgebaut ist und dennoch Multifunktionalität bei der Bedienung eines bewegbaren Möbelteils bietet.

Diese Aufgabe wird durch eine Bewegungsvorrichtung mit den Merkmalen des unabhängigen Anspruchs 1 gelöst. Weiterbildungen der Erfindung sind in den Unteransprüchen dargestellt.

Die erfindungsgemäße Bewegungsvorrichtung zeichnet sich dadurch aus, dass die Kupplung als Schaltkupplung ausgebildet ist, die in wenigstens drei voneinander verschiedenen Schaltstellungen stellbar ist, von denen wenigstens zwei voneinander verschiedene, als Stellantrieb und Abtrieb miteinander kuppelnde Kupplungs-Schaltstellungen und wenigstens eine als Stellantrieb und Abtrieb voneinander entkuppelnde Entkupplungs-Schaltstellung vorgesehen sind, wobei die Kupplung als Schaltkupplung ausgebildet ist, die in wenigstens drei voneinander verschiedene Schaltstellungen stellbar ist, von denen wenigstens zwei voneinander verschiedene, als Stellantrieb und Abtrieb miteinander kuppelnde Kupplungs-Schaltstellungen und wenigstens eine als Stellantrieb und Abtrieb voneinander entkuppelnde Entkupplungs-Schaltstellung vorgesehen sind, wobei der Stellantrieb als reversierender Antrieb ausgebildet ist, der wahlweise zwischen Links- und Rechtslauf umschaltbar ist, wobei eine der Kupplungs-Schaltstellungen dem Links- und eine andere der Kupplungs-Schaltstellungen dem Rechtslauf zugeordnet ist, wobei die Kupplung Kupplungsmittel aufweist, die mit dem Stellantrieb bewegungskoppelbar oder bewegungsgekoppelt sind und die allein durch die Antriebsbewegung des Stellantriebs ohne weitere Hilfsmittel in die gewünschte Kupplungs-Schaltstellung oder Entkupplungs-Schaltstellung bewegbar sind, und wobei die Kupplungsmittel mehrere Kupplungsteile umfassen, von denen wenigstens eines dem Stellantrieb und wenigstens eines dem Abtrieb zugeordnet ist, wobei das wenigstens eine antriebsseitige Kupplungsteil relativ zum wenigstens einen abtriebsseitigen Kupplungsteil bewegbar angeordnet ist.

Die Ausgestaltung der Kupplung als Schaltkupplung ermöglicht es dem Benutzer aktiv Einfluss auf das Schaltverhalten zu nehmen. Dies kann beispielsweise bequem mittels Fernsteuerung erfolgen. Die Kupplung lässt sich also aktiv zwischen mindestens einer Kupplungs-Schaltstellung und einer Entkupplungs-Schaltstellung schalten. Stellt der Benutzer beispielsweise fest, dass ein motorischer Betrieb des bewegbaren Möbelteils beispielsweise infolge eines defekten Stellantriebs oder Energieausfalls nicht möglich ist, so kann er die Kupplung aktiv in die Entkupplungs-Schaltstellung schalten, wodurch Stellantrieb und Abtrieb getrennt werden. Danach kann das bewegbare Möbelteil manuell bewegt werden. Die Aktivierung der Kupplung ist unabhängig von der Stellposition des bewegbaren Möbelteils. Besonders zweckmäßig ist es, die Kupplung in einer Endstellung des bewegbaren Möbelteils, beispielsweise Schließstellung einer Möbelklappe oder Schublade, in die Entkupplungs-Schaltstellung zu schalten. Dies lässt sich auch automatisch, beispielsweise über eine zugeordnete Sensorik steuern, wodurch das bewegbare Möbelteil in der Endstellung stets vom Stellantrieb entkuppelt ist.

Ein weiterer Aspekt der erfindungsgemäßen Bewegungsvorrichtung ist, dass sich die Kupplung in wenigstens zwei voneinander verschiedene Kupplungs-Schaltstellungen schalten lässt. Übertragen auf ein bewegbares Möbelteil, beispielsweise Möbelklappe oder Schublade, bedeutet dies, dass die Kupplung beispielsweise zum Öffnen des bewegbaren Möbelteils in eine erste Kupplungs-Schaltstellung geschaltet wird, während sie zum Schließen in eine andere Kupplungs-Schaltstellung geschaltet werden kann.

Der Stellantrieb ist als reversierender Antrieb ausgebildet, der wahlweise zwischen Links- und Rechtslauf umschaltbar ist, wobei eine der Kupplungs-Schaltstellungen dem Links- und eine andere der Kupplungs-Schaltstellungen dem Rechtslauf zugeordnet ist. Das bewegbare Möbelteil lässt sich also durch Links- oder Rechtslauf des Stellantriebs bewegen und dann durch Umschalten in die jeweils andere Antriebsrichtung in die andere Richtung bewegen.

Die Kupplung weist Kupplungsmittel auf, die mit dem Stellantrieb bewegungskoppelbar oder bewegungsgekoppelt sind und die allein durch die Antriebsbewegung des Stellantriebs ohne weitere Hilfsmittel in die gewünschte Kupplungs-Schaltstellung oder Entkupplungs-Schaltstellung bewegbar sind.

Besonders bevorzugt ist die Schaltkupplung derart ausgebildet, dass das Entkuppeln der Kupplungsmittel von der eingenommenen Kupplungs-Schaltstellung in die gewünschte Entkupplungs-Schaltstellung und umgekehrt durch Umschalten der Antriebsrichtung des reversierenden Stellantriebs erfolgt.

Bei einer Weiterbildung der Erfindung sind die Kupplungsmittel derart ausgebildet, dass in der eingenommenen Kupplungs-Schaltstellung Kupplungsmittel und Abtrieb über Formschluss- und/oder Kraftschlussmittel gekuppelt sind.

Die Kupplungsmittel umfassen mehrere Kupplungsteile, von denen wenigstens eines dem Stellantrieb und wenigstens eines dem Abtrieb zugeordnet ist, wobei das wenigstens eine antriebsseitige Kupplungsteil relativ zum wenigstens einen abtriebsseitigen Kupplungsteil bewegbar angeordnet ist.

In besonders bevorzugter Weise sind am antriebsseitigen und abtriebsseitigen Kupplungsteil die Formschluss- und/oder Kraftschlussmittel ausgebildet, die in der eingenommenen Kupplungs-Schaltstellung in Eingriff miteinander sind, wobei vorzugsweise die Form- und/oder Kraftschlussmittel miteinander korrespondierende Verzahnungen und/oder Rastungen am antriebsseitigen Kupplungsteil einerseits und am abtriebsseitigen Abtriebsteil andererseits umfassen.

Bei einer Weiterbildung sind miteinander korrespondierende Verzahnungen vorgesehen, die derart ausgebildet sind, dass bei Überschreiten eines bestimmten Drehmoments die miteinander korrespondierenden Verzahnungen außer Eingriff zueinander gelangen. Dadurch ist die Kupplung zusätzlich mit einer Überlastfunktion ausgestattet. Damit ist es beispielsweise möglich, auch während des motorischen Betriebs manuell auszukuppeln -generieren eines Überlastfalls- und das bewegbare Möbelteil beispielsweise schneller als über den motorischen Betrieb anzutreiben, wodurch sich eine sogenannte Überholfunktion erzeugen lässt.

In besonders bevorzugter Weise ist dem Stellantrieb ein Getriebe zur Übertragung der Antriebsbewegung auf den Abtrieb unter Zwischenschaltung der Schaltkupplung zugeordnet, wobei das Getriebe mehrere Getriebeelemente aufweist, von denen eines gleichzeitig das antriebsseitige Kupplungsteil ist.

Besonders bevorzugt ist das Getriebe als Zahnradgetriebe, insbesondere Schneckengetriebe, ausgebildet. Es ist möglich, dass dem Stellantrieb eine Antriebswelle in Form einer Antriebsschnecke zugeordnet ist, die in Eingriff mit einem Schneckenrad steht, wodurch die Antriebsbewegung von der Schnecke auf das Schneckenrad übertragbar ist.

Die Erfindung umfasst ferner noch ein Möbel, mit einem Möbelkorpus, dem wenigstens ein bewegbares Möbelteil zugeordnet ist, das über eine Bewegungsvorrichtung zwischen einer Schließstellung und einer Offenstellung beweglich geführt ist, wobei die Bewegungsvorrichtung nach einem der Ansprüche 1 bis 9 ausgebildet ist.

Ein bevorzugtes Ausführungsbeispiel der Erfindung ist in der Zeichnung dargestellt und wird im Folgenden näher erläutert. In der Zeichnung zeigen:
- Figur 1: eine schematische perspektivische Darstellung eines bevorzugten Ausführungsbeispiels der erfindungsgemäßen Bewegungsvorrichtung, wobei eine erste Kupplungs-Schaltstellung dargestellt ist, und
- Figur 2: die Bewegungsvorrichtung von Figur 1 in der anderen Kupplungs-Schaltstellung.

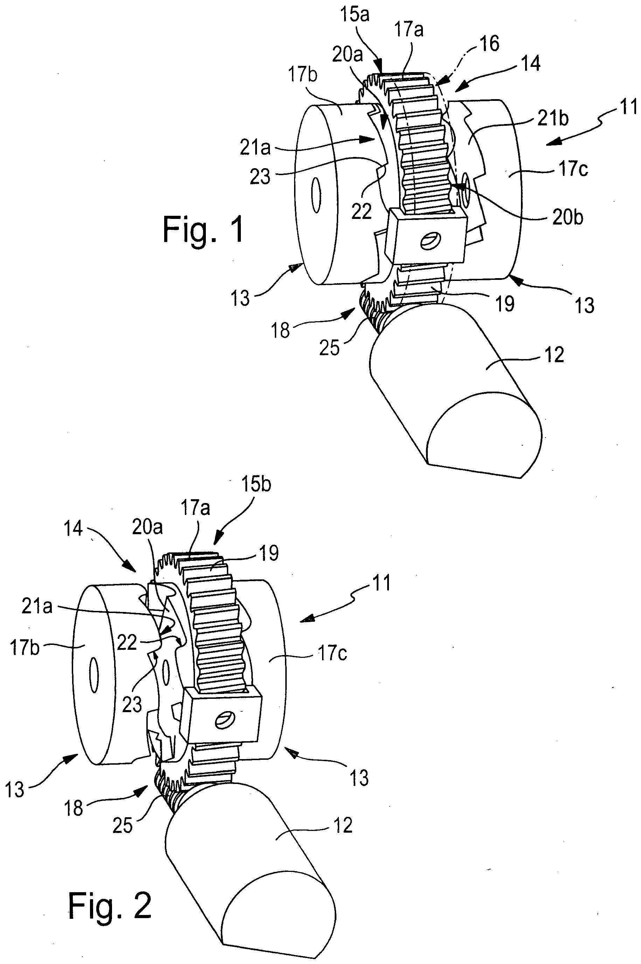

Die Figuren 1 und 2 zeigen ein bevorzugtes Ausführungsbeispiel der erfindungsgemäßen Bewegungsvorrichtung 11. Die Bewegungsvorrichtung 11 dient zum Antreiben eines bewegbaren Möbelteils. Dies kann beispielsweise eine Möbelklappe, eine Tür, eine Schublade oder dergleichen sein.

Die Bewegungsvorrichtung besitzt einen Stellantrieb 12, der beispielsweise als Elektromotor ausgebildet ist. Der Stellantrieb 12 ist reversierend ausgebildet und kann wahlweise zwischen Links- und Rechtslauf umgeschaltet werden. Das Umschalten kann über Ansteuermittel erfolgen, beispielsweise drahtlos mittels Funk- oder Infrarot-Fernsteuerung, die vom Benutzer bequem bedient werden kann. Die Bewegungsvorrichtung 11 umfasst ferner einen Abtrieb 13, der durch den Stellantrieb 12 antreibbar ist und mit dem bewegbaren Möbelteil gekoppelt ist.

Es ist ferner eine Kupplung 14 vorgesehen, die sowohl mit dem Stellantrieb 12 als auch mit dem Abtrieb 13 zusammenwirkt und zwischen dem Stellantrieb 12 und dem Abtrieb 13 angeordnet ist.

Die Kupplung 14 ist als Schaltkupplung ausgebildet, die in wenigstens drei voneinander verschiedenen Schaltstellungen stellbar ist, von denen wenigstens zwei voneinander verschiedene, als Stellantrieb 12 und Abtrieb 13 miteinander kuppelnde Kupplungs-Schaltstellungen 15a, 15b und wenigstens eine als Stellantrieb 12 und Abtrieb 13 voneinander entkuppelnde Entkupplungs-Schaltstellung 16 vorgesehen sind.

Im dargestellten Beispielsfall lassen sich zwei Kupplungs-Schaltstellungen 15a, 15b einstellen, wie in den Figuren 1 und 2 dargestellt, wobei Figur 1 die eine und Figur 2 die andere Kupplungs-Schaltstellung zeigt. In strichpunktierter Darstellung ist ferner noch die Entkupplungs-Schaltstellung 16 dargestellt.

Die Kupplung 14 weist Kupplungsmittel in Form mehrerer Kupplungsteile 17a-c auf, die mit dem Stellantrieb 12 bewegungskoppelbar oder bewegungsgekoppelt sind und die alleine durch die Antriebsbewegung des Stellantriebs 12 ohne weitere Hilfsmittel in die gewünschte Kupplungs-Schaltstellung 15a, 15b oder Entkupplungs-Schaltstellung 16 bewegbar sind.

Gemäß dem in den Figuren 1 und 2 gezeigten bevorzugten Ausführungsbeispiel sind die Kupplungsteile 17a-c Bestandteile eines Getriebes 18 zur Übertragung der Antriebsbewegung auf den Abtrieb 13. In diesem Fall stellen die Kupplungsteile 17a-c auch die Getriebeteile des Getriebes 18 dar.

Wie insbesondere in den Figuren 1 und 2 dargestellt, besitzt der reversierende Stellantrieb 12 eine rotatorisch antreibbare Antriebwelle in Form einer Antriebsschnecke 25. Mit der Antriebsschnecke wirkt ein antriebsseitiges Kupplungsteil 17a zusammen, das als Schneckenrad ausgebildet ist. Wie in den Figuren gezeigt, findet zur Kraftübertragung zwischen der Antriebsschnecke 25 und dem Schneckenrad ein Formschluss statt, das heißt, die Gewindegänge der Antriebsschnecke 25 greifen in die Gewindegänge des Schneckenrads ein. Hierbei weist das Schneckenrad eine Schrägverzahnung 19 auf, wodurch sich je nach Antriebsrichtung des Stellantriebs 12 eine Axialbewegung in die eine oder andere Richtung ergibt.

Die Schrägverzahnung 19 ist am Außenumfang des Schneckenrades ausgebildet. Das Schneckenrad besitzt ferner noch an den beiden einander entgegengesetzten Stirnseiten jeweils eine Stirnverzahnung 20a, 20b, die sägezahnartig ausgebildet ist.

Wie in den Figuren 1 und 2 dargestellt, sind zwei weitere, abtriebsseitige Kupplungsteile 17b, 17c vorgesehen, die gleichzeitig auch Teile des Abtriebs 13 bilden. Die beiden Kupplungsteile 17b, 17c sind einander mit Abstand gegenüberliegend angeordnet, während das Schneckenrad im Zwischenraum zwischen den beiden Kupplungsteilen 17b, 17c angeordnet ist. Dabei ist der Abstand zwischen den beiden abtriebsseitigen Kupplungsteilen 17b, 17c größer als das Axialmaß des Schneckenrads, wodurch dieses in nachfolgend noch näher beschriebener Weise zwischen den beiden abtriebsseitigen Kupplungsteilen 17b, 17c hin und her bewegt werden kann.

Wie in den Figuren 1 und 2 dargestellt, besitzen die abtriebsseitigen Kupplungsteile 17b, 17c jeweils eine dem Schneckenrad zugewandte Gegen-Stirnverzahnung 21a, 21b. Die Gegen-Stirnverzahnungen 21a, 21b sind ebenfalls sägezahnartig ausgestaltet und wirken mit den Stirnverzahnungen 20a, 20b am Schneckenrad in nachfolgend noch näher beschriebener Weise zusammen.

Nachfolgend wird die Funktionsweise der erfindungsgemäßen Bewegungsvorrichtung 11 beispielhaft beim Einsatz an einem als Möbelklappe ausgebildeten Möbelteil erläutert werden:
Die Möbelklappe befindet sich beispielsweise in deren Schließstellung. Dabei nimmt die Kupplung 14 zweckmäßigerweise die Entkupplungs-Schaltstellung 16 ein, das heißt, das Schneckenrad befindet sich zwischen den beiden abtriebsseitigen Kupplungsteilen 17b, 17c, wobei keine der Stirnverzahnungen 20a, 20b des Schneckenrads in eine der Gegen-Stirnverzahnungen 21a, 21b der abtriebsseitigen Kupplungsteile 17b, 17c eingreift. Diese Entkupplungs-Schaltstellung 16 in der Schließstellung der Möbelklappe ermöglicht es dem Benutzer, die Möbelklappe von Hand zu öffnen. Abtrieb 13 und Stellantrieb 12 sind dabei entkuppelt. Die Möbelklappe kann also auch dann geöffnet werden, wenn infolge eines Stromausfalls oder Defekts des Stellantriebs 12 eine motorische Öffnung nicht mehr möglich ist.

Möchte der Benutzer aber bei intakten Verhältnissen eine motorische Öffnung der Möbelklappe aus der Schließstellung in die Offenstellung bewirken, so aktiviert er über entsprechende Aktivierungsmittel, beispielsweise mittels Funksteuerung, den Stellantrieb 12. Der Stellantrieb 12 ist dabei bereits in die korrekte Laufrichtung geschaltet, das heißt beispielsweise im Linkslauf, wodurch das Schneckenrad durch die Antriebsbewegung der Antriebsschnecke 25 axial zum linken, also dem Öffnen der Möbelklappe zugeordneten, abtriebsseitigen Kupplungsteil 17c hin verlagert wird. Dabei kommt die Stirnverzahnung 20a in den Bereich der Gegen-Stirnverzahnung 21a, wobei die Steilflanken 22 der Zahnsegmente der Stirnverzahnung 20a mit den jeweils zugeordneten Gegen-Steilflanken 23 an der Gegen-Stirnverzahnung 21a in Kontakt kommen, so dass eine Drehmitnahme zwischen dem Schneckenrad und dem abtriebsseitigen Kupplungsteil 17b erzeugt wird. In diesem Zustand ist die Kupplung 14 in ihrer ersten Kupplungs-Schaltstellung 15a und bei der Weiterbewegung des Stellantriebs 12 wird die Möbelklappe daher geöffnet.

Die Möbelklappe fährt folglich motorisch bis in die gewünschte Stellung, beispielsweise in die Offenstellung, die durch Detektionsmittel detektiert wird, wodurch ein Signal an den Stellantrieb 12 abgegeben wird, der veranlasst wird, die Antriebsrichtung zu wechseln, also beispielsweise vom Linksin den Rechtslauf zu schalten. Dies bewirkt, dass sich das Schneckenrad infolge der Schrägverzahnung 19 wieder von dem abtriebsseitigen Kupplungsteil 17c löst und in die Entkupplungs-Schaltstellung 16 gelangt. Dort wird der Stellantrieb 12 automatisch gestoppt, so dass Möbelklappe vom Stellantrieb abgekuppelt ist und bei Bedarf von Hand geschlossen werden kann.

Soll die Möbelklappe jedoch motorisch von der Offenstellung in die Schließstellung bewegt werden, so wird der Stellantrieb wieder aktiviert, der im richtigen Lauf, also beispielsweise im Rechtslauf ist, wodurch das Schneckenrad zum anderen abtriebsseitigen Kupplungsteil 17c hin bewegt wird, so dass die andere Stirnverzahnung 20b an der anderen Stirnseite des Schneckenrads in die zugeordnete Gegen-Stirnverzahnung 21b des anderen abtriebsseitigen Kupplungsteils 17c in Eingriff gelangt, und zwar in analoger Weise zu dem vorstehend beschriebenen Vorgang mit den miteinander korrespondierenden Steilflanken und Gegen-Steilflanken. Die Möbelklappe kann durch die dabei entstehende Drehmitnahme zwischen dem Schneckenrad und dem anderen abtriebsseitigen Kupplungsteil 17d in die Schließstellung verlagert werden.

## Patentansprüche

1. Bewegungsvorrichtung für ein bewegbares Möbelteil, insbesondere Möbelklappe, Tür, Schublade oder dergleichen, mit einem Stellantrieb (12) und einem durch den Stellantrieb (12) antreibbaren Abtrieb (13) für das bewegbare Möbelteil, wobei eine mit dem Stellantrieb (12) und dem Abtrieb (13) zusammenwirkende Kupplung (14) vorgesehen ist, **dadurch gekennzeichnet, dass** die Kupplung (14) als Schaltkupplung ausgebildet ist, die in wenigstens drei voneinander verschiedene Schaltstellungen stellbar ist, von denen wenigstens zwei voneinander verschiedene, als Stellantrieb (12) und Abtrieb (13) miteinander kuppelnde Kupplungs-Schaltstellungen (15a, 15b) und wenigstens eine als Stellantrieb (12) und Abtrieb (13) voneinander entkuppelnde Entkupplungs-Schaltstellung (16) vorgesehen sind, wobei der Stellantrieb (12) als reversierender Antrieb ausgebildet ist, der wahlweise zwischen Links- und Rechtslauf umschaltbar ist, wobei eine der Kupplungs-Schaltstellungen (15a) dem Links- und eine andere der Kupplungs-Schaltstellungen (15b) dem Rechtslauf zugeordnet ist, wobei die Kupplung (14) Kupplungsmittel aufweist, die mit dem Stellantrieb (12) bewegungskoppelbar oder bewegungsgekoppelt sind und die allein durch die Antriebsbewegung des Stellantriebs (12) ohne weitere Hilfsmittel in die gewünschte Kupplungs-Schaltstellung (15a, 15b) oder Entkupplungs-Schaltstellung (16) bewegbar sind, und wobei die Kupplungsmittel mehrere Kupplungsteile (17a-c) umfassen, von denen wenigstens eines dem Stellantrieb (12) und wenigstens eines dem Abtrieb (13) zugeordnet ist, wobei das wenigstens eine antriebsseitige Kupplungsteil (17a) relativ zum wenigstens einen abtriebsseitigen Kupplungsteil (17b, 17c) bewegbar angeordnet ist.

2. Bewegungsvorrichtung nach Anspruch 1, **dadurch gekennzeichnet, dass** die Kupplung (14) derart ausgebildet ist, dass das Entkuppeln der Kupplungsmittel von der eingenommenen Kupplungs-Schaltstellung (15a, 15b) in die gewünschte Entkupplungs-Schaltstellung (16) und umgekehrt durch Umschalten der Antriebsrichtung des reversierenden Stellantriebs (12) erfolgt.

3. Bewegungsvorrichtung nach Anspruch 1 oder 2, **dadurch gekennzeichnet, dass** die Kupplungsmittel derart ausgebildet sind, dass in der eingenommenen Kupplungs-Schaltstellung (15a, 15b) Kupplungsmittel und Abtrieb (13) über Formschluss- und/oder Kraftschlussmittel gekuppelt sind.

4. Bewegungsvorrichtung nach einem der vorhergehenden Ansprüche, **dadurch gekennzeichnet, dass** am antriebsseitigen und abtriebsseitigen Kupplungsteil (17a-c) die Formschluss- und/oder Kraftschlussmittel ausgebildet sind, die in der eingenommenen Kupplungs-Schaltstellung (15a, 15b) in Eingriff miteinander sind, wobei vorzugsweise die Form- und/oder Kraftschlussmittel miteinander korrespondierende Verzahnungen (20a, 20b, 21a, 21b) und/oder Rastungen am antriebsseitigen Kupplungsteil (17a) einerseits und am wenigstens einen abtriebsseitigen Kupplungsteil (17b, 17c) andererseits umfassen.

5. Bewegungsvorrichtung nach einem der vorhergehenden Ansprüche, **dadurch gekennzeichnet, dass** miteinander korrespondierende Verzahnungen (20a, 20b, 21a, 21b) vorgesehen sind, die derart ausgebildet sind, dass bei Überschreiten eines bestimmten Drehmoments die miteinander korrespondierenden Verzahnungen (20a, 20b, 21a, 21b) außer Eingriff zueinander gelangen.

6. Bewegungsvorrichtung nach einem der vorhergehenden Ansprüche, **dadurch gekennzeichnet, dass** dem Stellantrieb (12) ein Getriebe (18) zur Übertragung der Antriebsbewegung auf den Abtrieb (13) unter Zwischenschaltung der Kupplung (14) zugeordnet ist, wobei das Getriebe (18) mehrere Getriebeelemente aufweist, von denen eines gleichzeitig das antriebsseitige Kupplungsteil (17a) ist.

7. Bewegungsvorrichtung nach Anspruch 6, **dadurch gekennzeichnet, dass** das Getriebe (18) als Zahnradgetriebe, insbesondere Schneckengetriebe, ausgebildet ist.

8. Bewegungsvorrichtung nach Anspruch 7, **dadurch gekennzeichnet, dass** das antriebsseitige Kupplungsteil (17a) als Schneckenrad ausgebildet ist, das mit einer als Antriebsschnecke (25) ausgebildeten Antriebswelle des Stellantriebs (12) bewegungsgekoppelt ist.

9. Möbel, mit einem Möbelkorpus, dem wenigstens ein bewegbares Möbelteil zugeordnet ist, das über eine Bewegungsvorrichtung (11) zwischen einer Schließstellung und einer Offenstellung beweglich geführt ist, **dadurch gekennzeichnet, dass** die Bewegungsvorrichtung (11) nach einem der Ansprüche 1 bis 8 ausgebildet ist.

## Claims

1. Movement device for a movable furniture part, in particular a furniture flap, door, drawer or the like, with an actuator (12) and an output (13) for the movable furniture part, drivable by the actuator (12), wherein there is provided a coupling (14) interacting with the actuator (12) and the output (13), **characterised in that** the coupling (14) is in the form of a switch coupling which may be set in at least three switch positions, differing from one another, of which there are provided at least two coupling switch positions (15a, 15b) coupling the actuator (12) and the output (13) to one another, and at least one uncoupling switch position (16) uncoupling the actuator (12) and the output (13) from one another, wherein the actuator (12) is designed as a reversing drive, which may be switched between anti-clockwise rotation and clockwise rotation, wherein one of the coupling switch positions (15a) is assigned to anti-clockwise rotation and another of the coupling switch positions (15b) is assigned to clockwise rotation, wherein the coupling (14) has coupling means which are or may be movement-coupled to the actuator (12) and which may be moved solely by the driving movement of the actuator (12) without further assistance into the desired coupling switch position (15a, 15b) or uncoupling switch position (16), and wherein the coupling means comprise several coupling parts (17a-c), of which at least one is assigned to the actuator (12) and at least one is assigned to the output, wherein the at least one drive-side coupling part (17a) is arranged movably relative to the at least one output-side coupling part (17b, 17c).

2. Movement device according to claim 1, **characterised in that** the coupling (14) is so designed that uncoupling of the coupling means from the assumed coupling switch position (15a, 15b) into the desired uncoupling switch position (16) and vice-versa is effected by switching over the driving direction of the reversing actuator (12).

3. Movement device according to claim 1 or 2, **characterised in that** the coupling means are so designed that, in the assumed coupling switch position (15a, 15b), coupling means and output (13) are connected by form- and/or force-fitting means.

4. Movement device according to any of the preceding claims, **characterised in that** the form- and/or force-fitting means are formed on the drive-side and output-side coupling part (17a-c) and, in the assumed coupling switch position (15a, 15b), are in engagement with one another, wherein preferably the form- and/or force-fitting means comprise teeth (20a, 20b, 21a, 21b) corresponding with one another and/or latching means on the drive-side coupling part (17a) on the one hand and on at least one output-side coupling part (17b, 17c) on the other hand.

5. Movement device according to any of the preceding claims, **characterised in that** teeth (20a, 20b, 21a, 21b) corresponding with one another are provided which are so designed that, on exceeding a certain torque, the teeth (20a, 20b, 21a, 21b) corresponding with one another disengage from one another.

6. Movement device according to any of the preceding claims, **characterised in that** the actuator (12) is assigned a gear (18) to transmit the driving movement to the output (13) with interposition of the coupling (14), wherein the gear (18) has several gear elements, one of which is at the same time the drive-side coupling part (17a).

7. Movement device according to claim 6, **characterised in that** the gear (18) is in the form of a gear drive, in particular a worm gear.

8. Movement device according to claim 7, **characterised in that** the drive-side coupling part (17a) is in the form of a worm gear which is movement-coupled to a drive shaft of the actuator (12) in the form of a driving worm (25).

9. Piece of furniture with a furniture body, to which is assigned at least one movable furniture part, which is movably guided by a movement device (11) between a closed position and an open position, **characterised in that** the movement device (11) is designed according to any of claims 1 to 8.

## Revendications

1. Dispositif de mouvement pour une partie de meuble mobile, en particulier clapet de meuble, porte, tiroir ou similaire, avec un entraînement de réglage (12) et une sortie (13) entraînable par l'entraînement de réglage (12) pour la partie de meuble mobile, dans lequel un couplage (14) coopérant avec l'entraînement de réglage (12) et la sortie (13) est prévu, **caractérisé en ce que** le couplage (14) est réalisé en tant que couplage à commutation qui peut être placé dans au moins trois positions de commutation différentes les unes des autres, dont au moins deux positions de commutation de couplage (15a, 15b) différentes l'une de l'autre, se couplant entre elles en tant qu'entraînement de réglage (12) et que sortie (13) et au moins une position de commutation de découplage se découplant l'une des autres en tant qu'entraînement de réglage (12) et que sortie (13) sont prévues, dans lequel l'entraînement de réglage (12) est réalisé en tant qu'entraînement réversible qui peut être commuté au choix entre la marche à gauche et la marche à droite, dans lequel une des positions de commutation de couplage (15a) est associée à la marche à gauche et une autre des positions de commutation de couplage (15b) est associée à la marche à droite, dans lequel le couplage (14) présente des moyens de couplage qui sont ou peuvent être couplés en mouvement avec l'entraînement de réglage (12) et qui sont mobiles seulement par le mouvement d'entraînement de l'entraînement de réglage (12) sans autre moyen auxiliaire dans la position de commutation de couplage (15a, 15b) souhaitée ou la position de commutation de découplage (16), et dans lequel les moyens de couplage comportent plusieurs parties de couplage (17a-c), dont au moins une est associée à l'entraînement de réglage (12) et au moins une est associée à la sortie (13), dans lequel l'au moins une partie de couplage (17a) côté entraînement est agencée de manière mobile par rapport à l'au moins une partie de couplage (17b, 17c) côté sortie.

2. Dispositif de mouvement selon la revendication 1, **caractérisé en ce que** le couplage (14) est réalisé de telle manière que le découplage des moyens de couplage de la position de commutation de couplage (15a, 15b) occupée dans la position de commutation de découplage (16) souhaitée et inversement soit effectué par commutation du sens d'entraînement de l'entraînement de réglage (12) réversible.

3. Dispositif de mouvement selon la revendication 1 ou 2, **caractérisé en ce que** les moyens de couplage sont réalisés de telle manière que dans la position de commutation de couplage (15a, 15b) occupée, des moyens de couplage et la sortie (13) sont couplés par des moyens de liaison à complémentarité de formes et/ou de liaison à force.

4. Dispositif de mouvement selon l'une des revendications précédentes, **caractérisé en ce que** les moyens de liaison à complémentarité de formes et/ou de liaison à force sont réalisés au niveau de la partie de couplage (17a-c) côté entraînement et coté sortie, lesquels sont en prise l'un avec l'autre dans la position de commutation de couplage (15a, 15b) occupée, dans lequel de préférence les moyens de liaison à complémentarité de formes et/ou de liaison à force comportent des dentures (20a, 20b, 21a, 21b) correspondant les unes avec les autres et/ou des crans au niveau de la partie de couplage (17a) côté entraînement d'une part et au niveau d'au moins une partie de couplage (17b, 17c) côté sortie d'autre part.

5. Dispositif de mouvement selon l'une des revendications précédentes, **caractérisé en ce que** des dentures (20a, 20b, 21a, 21b) correspondant les unes avec les autres sont prévues, lesquelles sont réalisées de telle manière qu'en cas de dépassement d'un couple déterminé, les dentures (20a, 20b, 21a, 21b) correspondant les unes avec les autres parviennent hors prise les unes des autres.

6. Dispositif de mouvement selon l'une des revendications précédentes, **caractérisé en ce qu'**un engrenage (18) est associé à l'entraînement de réglage (12) pour la transmission du mouvement d'entraînement à la sortie (13) en intercalant le couplage (14), dans lequel l'engrenage (18) présente plusieurs éléments d'engrenage, dont un est simultanément la partie de couplage (17a) côté entraînement.

7. Dispositif de mouvement selon la revendication 6, **caractérisé en ce que** l'engrenage (18) est réalisé en tant qu'engrenage à roue dentée, en particulier engrenage à vis sans fin.

8. Dispositif de mouvement selon la revendication 7, **caractérisé en ce que** la partie de couplage (17a) côté entraînement est réalisée en tant que roue hélicoïdale qui est couplée en mouvement avec un arbre d'entraînement, réalisé en tant que vis sans fin d'entraînement (25), de l'entraînement de réglage (12).

9. Meuble, avec un corps de meuble, auquel est associée au moins une partie de meuble mobile qui est guidée de manière mobile par le biais d'un dispositif de mouvement (11) entre une position de fermeture et une position d'ouverture, **caractérisé en ce que** le dispositif de mouvement (11) est réalisé selon l'une des revendications 1 à 8.
